# EUROPEAN PATENT SPECIFICATION

(11) **EP 3 438 442 B1**
(45) Date of publication and mention of the grant of the patent: **11.12.2019**
(21) Application number: 17824057.8
(22) Date of filing: 26.06.2017
(51) Int. Cl.: F02M 35/10, B60P 3/20, F02B 63/00, F02B 77/13, F25D 11/00, B60H 1/32

(54) **SUB-ENGINE TYPE TRANSPORT REFRIGERATION UNIT**
TRANSPORTKÜHLEINHEIT MIT VERBRENNUNGSMOTOR
UNITÉ DE RÉFRIGÉRATION DE TRANSPORT DE TYPE À SOUS-MOTEUR

(30) Priority: 04.07.2016 JP 2016132546
(43) Date of publication of application: 06.02.2019
(73) Proprietor: Mitsubishi Heavy Industries Thermal Systems, Ltd., Tokyo 108-8215 (JP)
(72) Inventor: HOKAZONO, Toshiyuki, Tokyo 108-8215 (JP); JINNO, Hiroki, Tokyo 108-8215 (JP)
(74) Representative: Cabinet Beau de Loménie
(86) International application number: PCT/JP2017/023460
(87) International publication number: WO 2018/008451

(56) References cited:
- EP-A1- 2 439 473
- EP-A2- 0 220 625
- WO-A1-2015/057776
- JP-A- S57 164 809
- JP-A- 2009 052 833
- JP-A- 2010 042 776
- JP-A- 2015 117 863
- JP-U- H0 536 061
- JP-U- S56 160 119
- JP-U- S60 116 180

## Description

### Technical Field

The present invention relates to a self-powered type transportation refrigeration unit. Document EP 2439473 A1 shows a refrigeration unit without an intake pipe having an intake port which is open to the heat exchange room.

### Background Art

As a transportation refrigeration unit mounted on a refrigerated car, a refrigerated trailer, or the like, there is a self-powered type transportation refrigeration unit in which a dedicated sub-engine is mounted as a power source. Such a sub-engine has an intake pipe having an intake port and supplies air drawn from the intake port to the sub-engine as combustion air.

PTL 1 discloses a container refrigeration apparatus which is attached to a transport freight container and operates a refrigeration apparatus by driving force of a dedicated diesel engine. In the container refrigeration apparatus, the air outside the container refrigeration apparatus is supplied to the diesel engine.

### Citation List

### Patent Literature

[PTL 1] Japanese Unexamined Patent Application Publication No. S62-91773

### Summary of Invention

### Technical Problem

However, in the container refrigeration apparatus of PTL 1, the air supplied to the diesel engine that drives the refrigeration apparatus is introduced from the outside of the container refrigeration apparatus. Therefore, there is a possibility that air that has been affected by a transport ship, a transport vehicle, or the like in which the container refrigeration apparatus is mounted (for example, waste heat of an engine for traveling) may be introduced and supplied to the diesel engine. Since the air affected by the transport ship, the transport vehicle, or the like is likely to change in temperature and pressure depending on the state of the transport ship, the transport vehicle, or the like, there is a possibility that the pressure and temperature of the air supplied to the diesel engine may not become stable.

The present invention has been made in view of the above-described circumstances, and an object thereof is to provide a self-powered type transportation refrigeration unit capable of supplying air at a stable pressure and a stable temperature to a sub-engine.

### Solution to Problem

In order to solve the problems, the self-powered type transportation refrigeration unit of the present invention adopts the following means.

That is, a self-powered type transportation refrigeration unit according to an aspect of the present invention includes: a sub-engine which has an engine body and an intake pipe connected to the engine body to supply air to the engine body for driving a compressor; an outdoor heat exchanger which condenses gas compressed by the compressor; and a casing which accommodates the sub-engine and the outdoor heat exchanger, in which the casing is provided with a partition wall which partitions an engine room in which the engine body is set and a heat exchange room in which the outdoor heat exchanger is set, and the intake pipe has an intake port which is open to the heat exchange room.

In the above configuration, the intake port of the intake pipe through which the air is sent to the engine body of the sub-engine is open to the heat exchange room. Accordingly, the air in the heat exchange room is drawn from the intake port to be sent to the engine body of the sub-engine via the intake pipe. Since the heat exchange room is separated from the space provided with the engine body by the partition wall, the heat exchange room is less likely to be affected by the waste heat of the engine body with temperature and pressure varying with the degree of output of the sub-engine, and the air in the heat exchange room has a stable pressure and a stable temperature. In addition, since the heat exchange room is separated from the space provided with the engine body by the partition wall, pressure fluctuation due to vibration of the engine body does not occur in the heat exchange room, and the pressure therein is stable. As described above, in the above configuration, since the pressure and temperature of the air in the heat exchange room are stable, the air at a stable pressure and a stable temperature can be supplied to the engine body of the sub-engine from the intake port. Therefore, the vibration of the sub-engine due to the intake pressure pulsation caused by the fluctuation of the pressure and the temperature of the air supplied to the engine body can be suppressed. In addition, since vibration of panels caused by the vibration of the sub-engine can be suppressed, noise due to the vibration of panels can be suppressed.

In particular, a configuration in which the vibration of the sub-engine is suppressed can be realized without using components other than components of an existing self-powered type transportation refrigeration unit.

Furthermore, for example, in a case where an engine for traveling is disposed in the lower part of the vehicle and the heat exchange room is positioned above the engine room, since the heat exchange room is positioned above the engine room at a distance from the engine for traveling, the heat exchange room is less likely to be affected by the waste heat of the engine for traveling, and the pressure and temperature of the air in the heat exchange room are stable. Therefore, the vibration of the sub-engine due to the intake pressure pulsation caused by the fluctuation of the pressure and the temperature of the air supplied to the engine body can be suppressed. In addition, since vibration of panels caused by the vibration of the sub-engine can be suppressed, noise due to the vibration of panels can be suppressed.

In addition, in the self-powered type transportation refrigeration unit according to the aspect of the present invention, the engine room may be positioned below the heat exchange room, the intake pipe may include an air cleaner, and the air cleaner may be disposed in the engine room.

In the above configuration, the air cleaner is disposed in the engine room positioned below the heat exchange room. Therefore, even in a case where the self-powered type transportation refrigeration unit is positioned above the ground, inspection of the air cleaner and replacement of the elements of the air cleaner can be easily performed. Therefore, the maintainability of the air cleaner can be enhanced.

In addition, the self-powered type transportation refrigeration unit according to the aspect of the present invention may further include a fan which is provided in the casing and draws outside air into the heat exchange room.

In the above configuration, the outside air is introduced into the heat exchange room by the fan. Therefore, air at a relatively low temperature, which is similar to the outside air, can be supplied to the engine body of the sub-engine from the intake port. Therefore, a decrease in the output of the sub-engine due to an increase in the intake air temperature can be prevented.

In addition, since the outside air is introduced into the heat exchange room by the fan, the pressure in the heat exchange room is kept constant. Therefore, air at a stable pressure can be supplied to the engine body.

In addition, for example, in a case where the self-powered type transportation refrigeration unit is applied to a vehicle having a cabin and is disposed above the cabin, the outside air can be introduced into the heat exchange room without being blocked by the cabin. Therefore, a configuration in which outside air can be easily introduced into the self-powered type transportation refrigeration unit can be achieved. In addition, a configuration in which air that is not affected by the vehicle can be easily introduced can be achieved.

In the self-powered type transportation refrigeration unit according to the aspect of the present invention, when the fan is installed in a vehicle, the fan may be provided on a front side of the vehicle in the casing.

In the above configuration, the fan is provided on the front side of the casing. Therefore, when the outside air flowing from the front to the rear of the vehicle (for example, a wind flowing over the vehicle) is introduced into the heat exchange room, ram pressure can be used such that the outside air can be suitably introduced into the heat exchange room.

In the self-powered type transportation refrigeration unit according to the aspect of the present invention, the intake port may be open to a position avoiding a mainstream of the outside air introduced into the heat exchange room from the fan.

In the above configuration, the intake port is open to a position avoiding the mainstream of the outside air introduced into the heat exchange room from the fan. Therefore, it is difficult for rainwater, dust, and the like contained in the outside air introduced into the heat exchange room to be directly introduced into the intake pipe from the intake port. Therefore, introduction of foreign matter other than the air into the engine body of the sub-engine via the intake pipe can be prevented.

In the self-powered type transportation refrigeration unit according to the aspect of the present invention, the intake port may be open downward.

Rainwater and dust contained in the outside air introduced into the heat exchange room from the fan are directed downward from above by gravity. In the above configuration, since the intake port is open downward, it is difficult for rainwater, dust, and the like contained in the outside air introduced into the heat exchange room to be directly introduced into the intake pipe from the intake port. Even in a case where rainwater and dust flow into the heat exchange room from other than the fan, it is difficult for rainwater, dust, and the like to be directly introduced from the intake port which is open downward. Therefore, introduction of foreign matter other than the air into the engine body of the sub-engine via the intake pipe can be prevented.

In the self-powered type transportation refrigeration unit according to the aspect of the present invention, the intake port may be open in a downstream direction of the mainstream.

In the above configuration, the intake port is open in the downstream direction of the mainstream of the outside air introduced into the heat exchange room from the fan 16. Therefore, since the introduced outside air is not directly introduced into the intake port, it is difficult for rainwater, dust, and the like contained in the outside air introduced into the heat exchange room to be directly introduced into the intake pipe from the intake port. Therefore, introduction of foreign matter other than the air into the engine body of the sub-engine via the intake pipe can be prevented.

### Advantageous Effects of Invention

According to the present invention, air at a stable pressure and a stable temperature can be supplied to the sub-engine.

### Brief Description of Drawings

Fig. 1 is a side view of a vehicle to which a refrigeration unit according to an embodiment of the present invention is applied.
Fig. 2 is a plan view of the vehicle of Fig. 1.
Fig. 3 is a schematic longitudinal sectional view of the transportation refrigeration unit of Fig. 1.
Fig. 4 is a schematic front view illustrating the inside of the transportation refrigeration unit of Fig. 1.
Fig. 5 is a sectional view taken along the line A-A of Fig. 4.
Fig. 6 is an enlarged view of a main part of the embodiment.

### Description of Embodiments

Hereinafter, an embodiment of the present invention will be described with reference to the drawings.

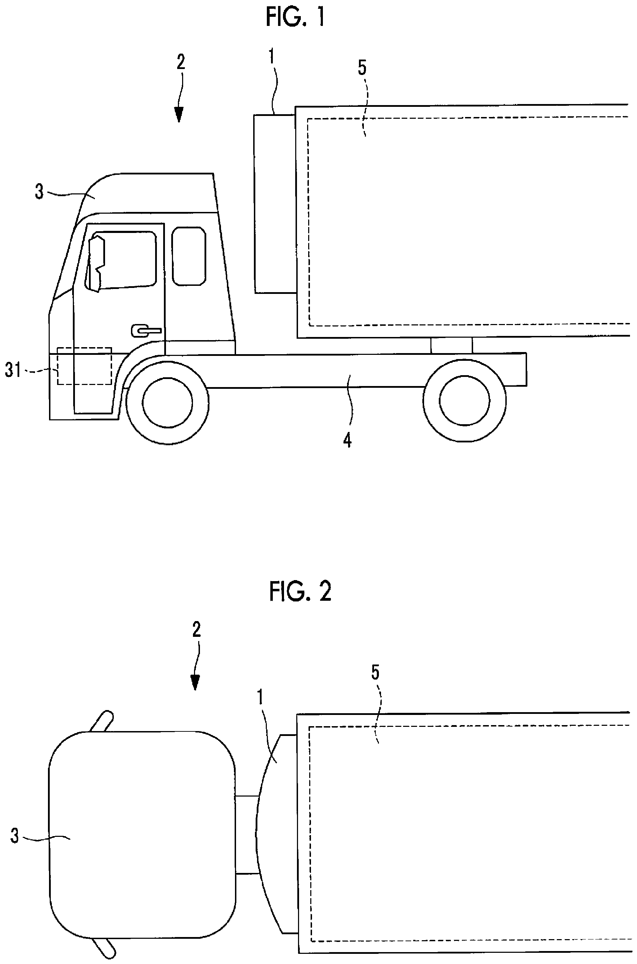

As illustrated in Figs. 1 and 2, a vehicle 2 on which a refrigeration unit (self-powered type transportation refrigeration unit) 1 according to the embodiment is mounted is a so-called cab-over type transport truck in which an engine 31 for traveling is disposed below a cabin 3. A trailer van body 5 is mounted on a frame 4 extending in a front-rear direction behind the cabin 3. The trailer van body 5 is disposed so that its front surface is separated from the rear surface of the cabin 3, and freight such as frozen and refrigerated items and the like are loaded therein.

The refrigeration unit 1 is provided on the front surface of the trailer van body 5 over the entire region in a vehicle-width direction. The refrigeration unit 1 is formed to have a short length in the front-rear direction so as not to affect the capacity of the trailer van body 5. In addition, the front surface of the refrigeration unit 1 is curved so that the length in the front-rear direction decreases from the center toward the outer sides in the vehicle-width direction. That is, the shape of the refrigeration unit 1 is formed so that cabin 3 and the refrigeration unit 1 do not interfere with each other when the vehicle 2 makes a turn. In addition, the refrigeration unit 1 according to the embodiment is a self-powered type transportation refrigeration unit in which a dedicated sub-engine 10 is mounted as a power source.

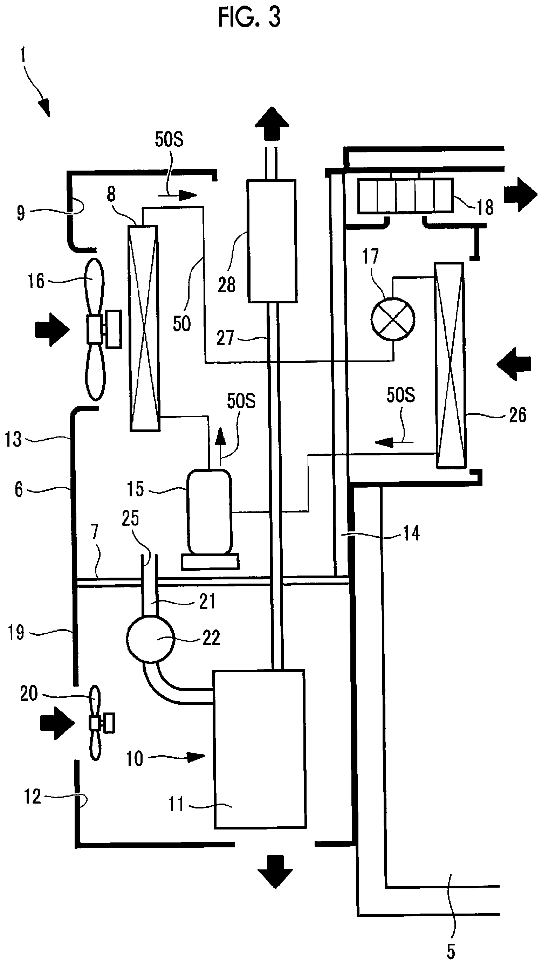

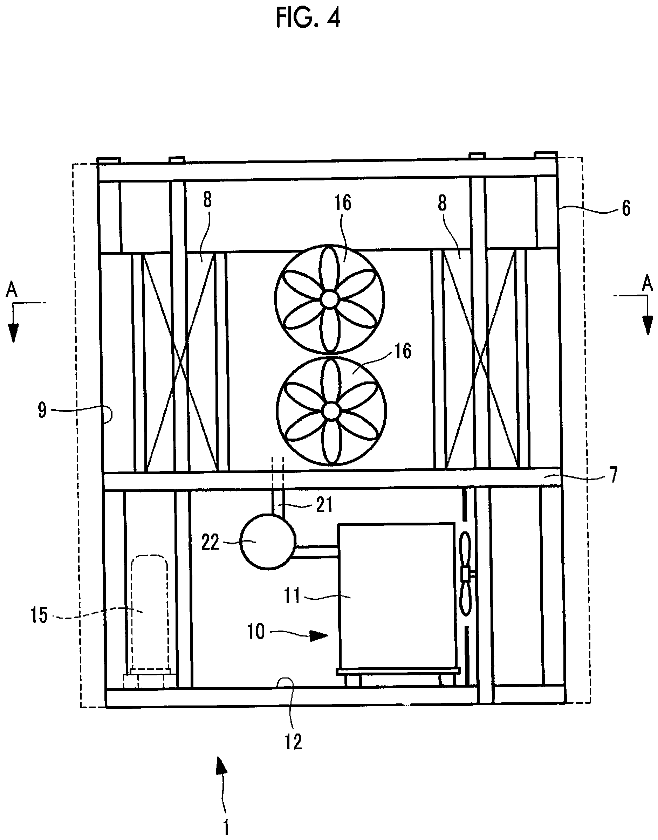

As illustrated in Figs. 3 and 4, the refrigeration unit 1 has a casing 6 as an outer covering of the refrigeration unit 1. The casing 6 is provided with a partition wall 7 that vertically partitions the internal space of the casing 6. An upper space partitioned by the partition wall 7 serves as a heat exchange room 9 provided with outdoor heat exchangers 8, which will be described later, and a lower space serves as an engine room 12 provided with a body part (engine body) 11 of the sub-engine 10.

As illustrated in FIGS. 3 to 5, the front side of the heat exchange room 9 is defined by an upper panel 13, and the rear side is defined by a thermal insulating wall 14. A compressor 15 and the outdoor heat exchangers 8 included in a refrigerant circuit 50 of the refrigeration unit 1 are accommodated in the heat exchange room 9. In the upper panel 13, two fan openings arranged vertically are formed substantially at the center in the vehicle-width direction, and outdoor heat exchange fans (fans) 16 through which outside air is introduced into the heat exchange room 9 are respectively disposed in the fan openings. The outdoor heat exchangers 8 are respectively disposed on the left side and the right side of the outdoor heat exchange fans 16 in the vehicle-width direction. Each of the outdoor heat exchangers 8 is provided such that its inner end in the vehicle-width direction is positioned in the vicinity of the rear surface of the upper panel 13, and its outer end in the vehicle-width direction is positioned in the vicinity of the front surface of the thermal insulating wall 14. For convenience of illustration, one of the two outdoor heat exchange fans 16 is illustrated in Fig. 3, and the other is omitted. Furthermore, in Fig. 4, the upper panel 13 is omitted for illustration.

In the trailer van body 5 at the rear separated from the heat exchange room 9 by the thermal insulating wall 14, together with the compressor 15 and the outdoor heat exchangers 8 accommodated in the heat exchange room 9, a decompression mechanism 17 included in the refrigerant circuit 50 and an indoor heat exchanger 26 are disposed, and an indoor heat exchange fan 18 is disposed in the vicinity of the upper surface of the trailer van body 5.

As illustrated in Figs. 3 and 4, the front side of the engine room 12 is defined by a lower panel 19. The lower panel 19 has a detachable configuration and is attached or detached at the time of maintenance or the like of components inside the engine room 12. The body part 11 of the sub-engine 10 for driving the compressor 15 is accommodated in the engine room 12 as described above. In the lower panel 19, a fan opening is formed substantially at the center in the vehicle-width direction, and an engine room ventilation fan 20 for ventilating the engine room 12 is disposed in the fan opening. In addition, a generator (not illustrated) is accommodated in the engine room 12. The generator converts the rotational energy of the body part 11 of the sub-engine 10 into electrical energy. Power generated by the generator is supplied to a motor (not illustrated), and when the motor is supplied with the power, the compressor 15 is driven by driving force of the motor. In the above description, an example in which the compressor 15 is disposed in the heat exchange room 9 is disposed is described. However, the compressor 15 may be disposed in the engine room 12. In a case where the compressor 15 is disposed in the engine room 12, the compressor 15 may be disposed as indicated by a dashed line in Fig. 4. In Fig. 4, the lower panel 19 is omitted for illustration.

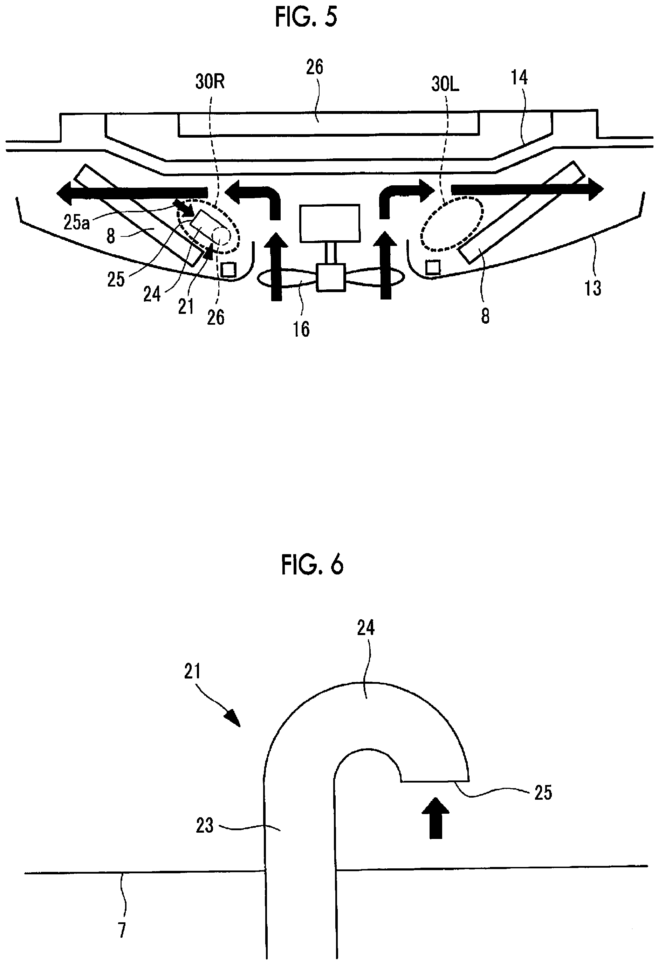

The sub-engine 10 includes the body part 11, an intake pipe 21 having one end connected to the body part 11 to supply combustion air to the body part 11, and an air cleaner 22 provided partway through the intake pipe 21. As described above, the body part 11 is disposed in the engine room 12. As illustrated in Fig. 6, the intake pipe 21 has an upstream portion 23 extending upward from the body part 11, a downstream portion 24 curved in a substantially U shape from the downstream end of the upstream portion 23, and an intake port 25 which is formed at the lower end of the downstream portion 24 and is open downward. As illustrated in Figs. 3 and 4, the upstream portion 23 extending upward from the body part 11 penetrates the partition wall 7 and extends to the heat exchange room 9. That is, in the intake pipe 21, a portion of the upstream portion 23, the downstream portion 24, and the intake port 25 are positioned in the heat exchange room 9. The intake pipe 21 positioned in the heat exchange room 9 has a vertically inverted J shape (see Fig. 6) and is open to the partition wall 7 side (the engine room 12 side). As illustrated in Figs. 3 and 4, the air cleaner 22 is provided partway through the upstream portion 23. The air cleaner 22 is provided in the engine room 12 and removes foreign matter other than air such as water and dust flowing through the intake port 25 by elements (not illustrated) provided therein. The exhaust gas generated by driving the body part 11 flows through the inside of an exhaust pipe 27 and is discharged to the upper side of the refrigeration unit 1 via a muffler 28. In Figs. 3 and 4, the detailed shape of the intake pipe (see Fig. 6) is omitted for illustration.

Next, the refrigerant circuit 50 will be described with reference to Fig. 3. According to the refrigerant circuit 50 described above, first, a refrigerant compressed by the compressor 15 is sent to the outdoor heat exchanger 8 via a pipe. The refrigerant sent to the outdoor heat exchanger 8 exchanges heat with the outside air introduced into the heat exchange room 9 by the outdoor heat exchange fan 16 and is thus cooled and condensed. The condensed refrigerant is sent to the decompression mechanism 17 disposed in the trailer van body 5 and is then decompressed. The decompressed refrigerant is thereafter sent to the indoor heat exchanger 26. The air in the trailer van body 5 is supplied to the indoor heat exchanger 26 by the indoor heat exchange fan 18. When the air in the trailer van body 5 is supplied to the indoor heat exchanger 26, the refrigerant evaporated in the indoor heat exchanger 26 and the air in the trailer van body 5 exchange heat with each other such that the air in the trailer van body 5 is cooled. Thereafter, the refrigerant that has exchanged heat with the air in the trailer van body 5 is returned to the compressor 15 in the heat exchange room 9, and this cycle is repeated in the refrigerant circuit 50 as indicated by an arrow 50S in Fig. 3.

Next, the flow of the air introduced into the heat exchange room 9 from the outdoor heat exchange fan 16 and the position where the intake pipe 21 is disposed in the heat exchange room 9 will be described with reference to Fig. 5.

As indicated by solid arrows in Fig. 5, the air introduced into the heat exchange room 9 from the outdoor heat exchange fan 16 moves rearward and collides with the thermal insulating wall 14 that defines the rear side in the heat exchange room 9. The air colliding with the thermal insulating wall 14 is divided into rightward and leftward flows in the vehicle-width direction. The divided rightward and leftward air flows each flow along the thermal insulating wall 14 (to be directed outward in the vehicle-width direction from the center of the thermal insulating wall 14 in the vehicle-width direction) and pass through the outdoor heat exchanger 8. That is, the outside air introduced into the heat exchange room 9 by the outdoor heat exchange fan 16 flows toward the outdoor heat exchanger 8. Such a flow of the air becomes the mainstream of the flow of the air introduced into the heat exchange room 9.

The intake port 25 provided in the intake pipe 21 is open to a position avoiding the mainstream. Specifically, as indicated by a dashed ellipse 30R in Fig. 5, the intake port 25 is disposed behind the inner end part of the outdoor heat exchanger 8 disposed in the heat exchange room 9. In addition, the intake pipe 21 is provided in such a direction that the intake port 25 is positioned outward and rearward of the upstream portion 23 in the vehicle-width direction. That is, the intake port 25 is open in a downstream direction of the mainstream of the air flowing in the heat exchange room 9 and as indicated by an arrow 25a in Fig. 5, the outside air is drawn from the intake port 25.

According to the embodiment, the following operational effects are exhibited.

In the embodiment, the intake port 25 of the intake pipe 21 through which the air is sent to the body part 11 of the sub-engine 10 is open to the heat exchange room 9 (see Figs. 3 and 4). Accordingly, the air in the heat exchange room 9 is drawn from the intake port 25 to be sent to the body part 11 of the sub-engine 10 via the intake pipe 21. Since the heat exchange room 9 is provided above the engine room 12 and is separated from the engine 31 for traveling, the heat exchange room 9 is less likely to be affected by the waste heat of the engine 31 for traveling, and the pressure and temperature of the air in the heat exchange room 9 are stable. In addition, since the heat exchange room 9 is separated from the space provided with the body part 11 by the partition wall 7, the heat exchange room 9 is not affected by the waste heat from the body part 11 with temperature and pressure varying with the degree of output of the sub-engine 10. Therefore, the pressure and the temperature of the air in the heat exchange room 9 are stable. Furthermore, since the heat exchange room 9 is separated from the space provided with the body part 11 by the partition wall 7, pressure fluctuation due to vibration of the body part 11 does not occur in the heat exchange room 9, and the pressure of the air in the heat exchange room 9 is stable. As described above, since the pressure and temperature of the air in the heat exchange room 9 are stable, the air at a stable pressure and a stable temperature can be supplied to the body part 11 of the sub-engine 10 from the intake port 25 as the combustion air. Therefore, the vibration of the sub-engine 10 due to the intake pressure pulsation caused by the fluctuation of the pressure and the temperature of the air supplied to the body part 11 can be suppressed. In addition, since vibration of panels caused by the vibration of the sub-engine 10 can be suppressed, noise due to the vibration of panels can be suppressed.

In particular, a configuration in which the vibration of the sub-engine 10 is suppressed can be realized without using components other than components of an existing refrigeration unit 1.

In addition, since the casing 6 of the refrigeration unit 1 is divided into the two spaces by the partition wall 7 and the body part 11 of the sub-engine 10 is accommodated in the engine room 12 as one of the spaces, noise emitted from the body part 11 can be blocked by the partition wall 7. Therefore, noise emitted from the refrigeration unit 1 can be reduced.

In addition, the air cleaner 22 is disposed in the engine room 12 positioned below the heat exchange room 9 (see the same figure). Therefore, as in the embodiment, even in a case where the refrigeration unit 1 is positioned above the ground, inspection of the air cleaner 22 and replacement of the elements of the air cleaner 22 can be easily performed. Therefore, the maintainability of the air cleaner 22 can be enhanced. In addition, the sub-engine 10 generally has many components which need to be replaced and inspected. In order to replace and inspect such components, the lower panel 19 that defines the front side of the engine room 12 is detachable. In the embodiment, since the air cleaner 22 is disposed in the engine room 12 in which components that need to be replaced and inspected are accommodated, the elements of the air cleaner 22 can be easily replaced by detaching the lower panel 19 which is detachable.

In addition, the outside air is introduced into the heat exchange room 9 by the outdoor heat exchange fan 16. Therefore, air at a relatively low temperature, which is similar to the outside air, can be supplied to the body part 11 of the sub-engine 10 from the intake port 25. Therefore, a decrease in the output of the sub-engine 10 due to an increase in the intake air temperature can be prevented.

In addition, since the outside air is introduced into the heat exchange room 9 by the outdoor heat exchange fan 16, the pressure in the heat exchange room 9 is kept constant. Therefore, air at a stable pressure can be supplied to the body part 11.

In addition, in the embodiment, the outdoor heat exchange fan 16 of the refrigeration unit 1 is disposed above the cabin 3. Therefore, since the outside air can be introduced into the heat exchange room 9 without being blocked by the cabin 3, a configuration in which outside air can be easily introduced into the heat exchange room 9 can be achieved. In addition, a configuration in which air that is not affected by the vehicle 2 (for example, an influence of waste heat of the engine 31 for traveling or the like) can be easily introduced can be achieved.

The outdoor heat exchange fan 16 is provided on the front side of the casing 6. Therefore, when the outside air flowing from the front to the rear of the vehicle 2 (for example, a wind flowing over the vehicle) is introduced into the heat exchange room 9, ram pressure can be used such that the outside air can be suitably introduced into the heat exchange room 9.

In addition, the intake port 25 is open to a position avoiding the mainstream of the outside air introduced into the heat exchange room 9 from the outdoor heat exchange fan 16 (see Fig. 5). Therefore, it is difficult for rainwater, dust, and the like contained in the outside air introduced into the heat exchange room 9 to be directly introduced into the intake pipe 21 from the intake port 25. Therefore, introduction of foreign matter other than the air into the body part 11 of the sub-engine 10 via the intake pipe 21 can be prevented.

In addition, rainwater and dust contained in the outside air introduced into the heat exchange room 9 from the outdoor heat exchange fan 16 are directed downward from above by gravity. In the embodiment, since the outside air is introduced in the direction of the arrow in FIG. 6 from the intake port 25 that is open downward, it is difficult for rainwater, dust, and the like contained in the outside air introduced into the heat exchange room 9 to be directly introduced into the intake pipe 21 from the intake port 25. Even in a case where rainwater and dust flow into the heat exchange room 9 from other than the outdoor heat exchange fan 16, it is difficult for rainwater, dust, and the like to be directly introduced from the intake port 25 which is open downward. Therefore, introduction of foreign matter other than the air into the body part 11 of the sub-engine 10 via the intake pipe 21 can be prevented.

In addition, the intake port 25 is open in the downstream direction of the mainstream of the outside air introduced into the heat exchange room 9 from the outdoor heat exchange fan 16 (see Fig. 5). Therefore, since the introduced outside air is not directly introduced into the intake port 25, it is difficult for rainwater, dust, and the like contained in the outside air introduced into the heat exchange room 9 to be directly introduced into the intake pipe 21 from the intake port 25. Therefore, introduction of foreign matter other than the air into the body part 11 of the sub-engine 10 via the intake pipe 21 can be prevented.

In addition, the present invention is not limited to inventions according to the embodiment and can be appropriately modified. For example, in the embodiment, the motor is driven by the electric power generated by the driving force of the sub-engine 10, and the compressor 15 is driven by the driving force of the motor. However, the compressor 15 may be driven directly by the driving force of the sub-engine 10 without using a generator and a motor.

In the embodiment, the intake pipe 21 is disposed behind the inner end part of the outdoor heat exchanger 8 (the dashed ellipse 30R in Fig. 5). However, the disposition of the intake pipe 21 is not limited thereto. The intake pipe 21 may be disposed in a dashed ellipse 30L in Fig. 5. Alternatively, the intake pipe 21 may be disposed at another position as long as the position avoids the mainstream of the flow of the air introduced into the heat exchange room 9.

### Reference Signs List

1 refrigeration unit (self-powered type transportation refrigeration unit)
5 trailer van body
6 casing
7 partition wall
8 outdoor heat exchanger
9 heat exchange room
10 sub-engine
11 body part (engine body)
12 engine room
16 outdoor heat exchange fan (fan)
21 intake pipe
22 air cleaner
25 intake port

## Claims

1. A self-powered type transportation refrigeration unit comprising:
a sub-engine (10) which has an engine body (11) and an intake pipe (21) connected to the engine body (11) to supply air to the engine body (11) for driving a compressor (15);
an outdoor heat exchanger (8) which condenses gas compressed by the compressor (15); and
a casing (6) which accommodates the sub-engine (10) and the outdoor heat exchanger (18),
wherein the casing (6) is provided with a partition wall (7) which partitions an engine room (12) in which the engine body (11) is set and a heat exchange room (9) in which the outdoor heat exchanger (8) is set, **characterized in that**
the intake pipe (21) has an intake port (25) which is open to the heat exchange room (9).

2. The self-powered type transportation refrigeration unit according to Claim 1,
wherein the engine room (12) is positioned below the heat exchange room (9),
the intake pipe (25) includes an air cleaner (22), and
the air cleaner (22) is disposed in the engine room (12) .

3. The self-powered type transportation refrigeration unit according to Claim 1 or 2, further comprising:
a fan (16) which is provided in the casing (6) and draws outside air into the heat exchange room (9).

4. The self-powered type transportation refrigeration unit according to Claim 3,
wherein, when the fan (16) is installed in a vehicle, the fan (16) is provided on a front side of the vehicle in the casing (6).

5. The self-powered type transportation refrigeration unit according to Claim 3 or 4,
wherein the intake port (25) is open to a position avoiding a mainstream of the outside air introduced into the heat exchange room (9) from the fan (16).

6. The self-powered type transportation refrigeration unit according to claim 5,
wherein the intake port (25) is open downward.

7. The self-powered type transportation refrigeration unit according to Claim 5 or 6,
wherein the intake port (25) is open in a downstream direction of the mainstream.

## Patentansprüche

1. Autarke Transportkühleinheit umfassend:
einen Teilmotor (10), der einen Motorblock (11) und ein mit dem Motorblock (11) verbundenes Ansaugrohr (21) zum Zuführen von Luft zu dem Motorblock (11) zum Antreiben eines Kompressors (15) aufweist;
einen Außenwärmetauscher (8), der durch den Kompressor (15) verdichtetes Gas kondensiert; und
ein Gehäuse (6), das den Teilmotor (10) und den Außenwärmetauscher (18) aufnimmt,
wobei das Gehäuse (6) mit einer Trennwand (7) versehen ist, die einen Motorraum (12), in dem sich der Motorblock (11) befindet, und einen Wärmetauschraum (9), in dem sich der Außenwärmetauscher (8) befindet, teilt,
**dadurch gekennzeichnet, dass**
das Ansaugrohr (21) eine Einlassöffnung (25) aufweist, die zum Wärmetauschraum (9) hin offen ist.

2. Autarke Transportkühleinheit nach Anspruch 1,
wobei der Motorraum (12) unterhalb des Wärmetauschraums (9) angeordnet ist,
das Ansaugrohr (25) einen Luftfilter (22) umfasst, und
der Luftfilter (22) in dem Motorraum (12) angeordnet ist.

3. Autarke Transportkühleinheit nach Anspruch 1 oder 2, die weiter umfasst:
einen Lüfter (16), der in dem Gehäuse (6) vorgesehen ist und Außenluft in den Wärmetauschraum (9) zieht.

4. Autarke Transportkühleinheit nach Anspruch 3,
wobei, wenn der Lüfter (16) in einem Fahrzeug installiert wird, der Lüfter (16) an einer Vorderseite des Fahrzeugs in dem Gehäuse (6) vorgesehen wird.

5. Autarke Transportkühleinheit nach Anspruch 3 oder 4,
wobei die Einlassöffnung (25) zu einer Position hin offen ist, die eine von dem Lüfter (16) in den Wärmetauschraum (9) eingeleitete Hauptströmung der Außenluft vermeidet.

6. Autarke Transportkühleinheit nach Anspruch 5,
wobei die Einlassöffnung (25) nach unten offen ist.

7. Autarke Transportkühleinheit nach Anspruch 5 oder 6,
wobei die Einlassöffnung (25) in einer stromabwärtigen Richtung der Hauptströmung offen ist.

## Revendications

1. Unité de réfrigération de transport de type autonome comprenant :
un sous-moteur (10) qui a un corps de moteur (11) et un tuyau d'admission (21) raccordé au corps de moteur (11) afin de fournir l'air au corps de moteur (11) pour entraîner un compresseur (15) ;
un échangeur de chaleur extérieur (8) qui condense le gaz comprimé par le compresseur (15) ; et
un carter (6) qui loge le sous-moteur (10) et l'échangeur de chaleur extérieur (18),
dans laquelle le carter (6) est prévu avec une paroi de séparation (7) qui sépare un compartiment de moteur (12) dans lequel le corps de moteur (11) est placé et un compartiment d'échange de chaleur (9) dans lequel l'échangeur de chaleur extérieur (8) est placé,
**caractérisée en ce que** :
le tuyau d'admission (21) a un orifice d'admission (25) qui est ouvert sur le compartiment d'échange de chaleur (9).

2. Unité de réfrigération de transport de type autonome selon la revendication 1,
dans laquelle le compartiment de moteur (12) est positionné au-dessous du compartiment d'échange de chaleur (9),
le tuyau d'admission (25) comprend un filtre à air (22), et
le filtre à air (22) est disposé dans le compartiment de moteur (12).

3. Unité de réfrigération de transport de type autonome selon la revendication 1 ou 2, comprenant en outre :
un ventilateur (16) qui est prévu dans le carter (6) et aspire l'air extérieur dans le compartiment d'échange de chaleur (9).

4. Unité de réfrigération de transport de type autonome selon la revendication 3,
dans laquelle, lorsque le ventilateur (16) est installé dans un véhicule, le ventilateur (16) est prévu sur un côté avant du véhicule dans le carter (6).

5. Unité de réfrigération de transport de type autonome selon la revendication 3 ou 4,
dans laquelle l'orifice d'admission (25) est ouvert dans une position évitant un courant principal de l'air extérieur introduit dans le compartiment d'échange de chaleur (9) provenant du ventilateur (16).

6. Unité de réfrigération de transport de type autonome selon la revendication 5,
dans laquelle l'orifice d'amission (25) est ouvert vers le bas.

7. Unité de réfrigération de transport de type autonome selon la revendication 5 ou 6,
dans laquelle l'orifice d'admission (25) est ouvert dans une direction en aval du courant principal.
